# FASCICULE DE BREVET EUROPEEN

(11) **EP 2 204 112 B1**
(45) Date de publication et mention de la délivrance du brevet: **14.03.2012**
(21) Numéro de dépôt: 09306245.3
(22) Date de dépôt: 16.12.2009
(51) Int. Cl.: A47J 27/08

(54) **Appareil de cuisson sous pression pourvu d'un organe de commande du verrouillage / deverrouillage a fonctionnement asymetrique**
Dampfdruckkochtopf mit Steuerorgan zum Verriegeln und Entriegeln mit asymetrischem Verhalten
Pressure cooker foreseen with a control device for locking and unlocking having an asymetric functioning

(30) Priorité: 30.12.2008 FR 0859148
(43) Date de publication de la demande: 07.07.2010
(73) Titulaire: SEB S.A., 69130 Ecully (FR)
(72) Inventeur: Chameroy, Eric, 21260, VERONNES (FR); Cartigny, Michel, Pierre, 21310, MIREBEAU (FR)
(74) Mandataire: Weber, Jean-François

(56) Documents cités:
- EP-A- 0 611 540
- FR-A- 2 863 849

## Description

La présente invention se rapporte au domaine technique général des appareils de cuisson, et en particulier des appareils domestiques de cuisson sous pression, du genre autocuiseurs, comprenant une cuve et un couvercle destiné à être verrouillé sur la cuve pour former une enceinte de cuisson sensiblement étanche, lesdits appareils étant destinés à assurer la cuisson sous pression de vapeur d'aliments contenus dans la cuve.

La présente invention concerne plus particulièrement un appareil de cuisson d'aliments comprenant :
- une cuve et un couvercle,
- un moyen de verrouillage / déverrouillage mobile entre une position verrouillée dans laquelle il verrouille le couvercle relativement à la cuve et une position déverrouillée dans laquelle le couvercle est libre relativement à la cuve,
- et un organe de commande du déplacement dudit moyen de verrouillage / déverrouillage, ledit organe de commande étant mobile entre une position de verrouillage et une position de déverrouillage correspondant respectivement aux positions verrouillée et déverrouillée dudit moyen de verrouillage / déverrouillage,
l'organe de commande et le moyen de verrouillage / déverrouillage coopérant pour que la position instantanée du moyen de verrouillage / déverrouillage varie en fonction de la position instantanée de l'organe de commande selon une première loi lorsque l'organe de commande est déplacé de sa position de verrouillage vers sa position de déverrouillage.

On connaît déjà des appareils de cuisson sous pression comprenant une cuve et un couvercle destiné à être verrouillé sur la cuve par l'intermédiaire d'un moyen de verrouillage / déverrouillage susceptible d'évoluer entre une position verrouillée, dans laquelle ledit moyen de verrouillage / déverrouillage verrouille le couvercle sur la cuve et une position déverrouillée dans laquelle le couvercle est libre relativement à la cuve et réciproquement. Un tel moyen de verrouillage / déverrouillage met par exemple en oeuvre une pluralité de mâchoires de verrouillage solidaires de bras entraîneurs disposés radialement sur le couvercle et dont le déplacement est commandé par un organe de commande monté sur le couvercle. L'utilisateur peut ainsi actionner l'organe de commande pour assurer le déplacement radial des mâchoires, soit en direction centrifuge, soit en direction centripète, pour positionner les mâchoires respectivement en position de déverrouillage ou en position de verrouillage.

On connaît en particulier un appareil de cuisson sous pression dont l'organe de commande du verrouillage / déverrouillage est constitué par une poignée centrale montée à rotation sur le couvercle selon un axe de rotation perpendiculaire au plan moyen d'extension du couvercle. L'utilisateur peut ainsi commander, à l'aide d'un organe de commande unique, le déglacement radial centripète et centrifuge des mâchoires en faisant tourner manuellement la poignée centrale en sens respectivement horaire et anti-horaire.

Une telle conception est particulièrement intéressante dans la mesure où elle permet à l'utilisateur de commander avec un seul et même organe de commande à la fois le verrouillage et le déverrouillage du couvercle relativement à la cuve.

Cet autocuiseur de l'art antérieur donne donc globalement satisfaction, ce qui n'empêche pas qu'il pourrait néanmoins être encore amélioré.

En effet, la grande simplicité de conception de cet appareil connu peut conduire à certaines erreurs d'utilisation. De telles erreurs peuvent en particulier provenir de l'extrême proximité entre le geste que doit accomplir l'utilisateur pour verrouiller le couvercle, et celui qu'il doit accomplir pour déverrouiller le couvercle. En réalité, la cinématique de verrouillage de cet appareil de l'art antérieur est strictement symétrique à la cinématique de déverrouillage. Ainsi, une rotation selon une course d'environ 45° en sens horaire permet de déplacer progressivement les mâchoires en direction radiale centrifuge jusqu'à ce qu'elles atteignent la position de déverrouillage, tandis que le verrouillage du couvercle est obtenu par une rotation de même amplitude angulaire mais en sens anti-horaire du même organe de commande unique, qui entraîne le déplacement progressif, en direction radiale centripète, des mâchoires jusqu'à leur position de verrouillage. Cette grande proximité entre la cinématique de verrouillage et la cinématique de déverrouillage peut donc entraîner une confusion pour l'utilisateur, qui peut penser, en dépit de repères visuels adaptés, avoir verrouillé l'appareil alors qu'il l'a en fait déverrouillé, et vice-versa.

En outre, la bonne réalisation du verrouillage et du déverrouillage du couvercle est directement liée à une rotation complète, sur toute sa course, de l'organe de commande unique. En d'autres termes, si l'utilisateur tourne par exemple l'organe de commande unique selon une course angulaire de 40° au lieu des 45° nécessaires au verrouillage complet de l'appareil, il est possible que l'appareil ne soit pas complètement verrouillé, ce qui empêcherait par la suite le déroulement normal du cycle de cuisson.

Enfin, il convient de relever que la sensation éprouvée par l'utilisateur en manipulant l'organe de commande unique est strictement la même, au sens de rotation prés, que l'utilisateur verrouille ou déverrouille le couvercle.

Ceci peut constituer un facteur de confusion et d'inquiétude pour l'utilisateur, dans la mesure où ce dernier peut éprouver des doutes, fondés ou non, quant à la réalisation effective du verrouillage ou du déverrouillage souhaité.

Un autocuiseur de l'art antérieur est par ailleurs décrit dans EP-0 611 540 A.

Les objets assignés à l'invention visent en conséquence à porter remède aux divers inconvénients énumérés précédemment et à proposer un nouvel appareil de cuisson d'aliments, et en particulier un autocuiseur, qui tout en étant de construction extrêmement simple, compacte et bon marché, est facile, fiable et rassurant à utiliser.

Un autre objet de l'invention vise à proposer un nouvel appareil de cuisson d'aliments, et en particulier un autocuiseur, qui permet un déverrouillage précisément contrôlé du couvercle relativement à la cuve.

Un autre objet de l'invention vise à proposer un nouvel appareil de cuisson d'aliments, et en particulier un autocuiseur, qui limite les risques de verrouillage incomplet et dont le fonctionnement à cet égard est rassurant pour l'utilisateur.

Un autre objet de l'invention vise à proposer un nouvel appareil de cuisson d'aliments, et en particulier un autocuiseur, qui soit utilisable avec un minimum d'efforts physiques à fournir de la part de l'utilisateur.

Un autre objet de l'invention vise à proposer un nouvel appareil de cuisson d'aliments, et en particulier un autocuiseur, qui permette un verrouillage franc et net du couvercle relativement à la cuve.

Un autre objet de l'invention vise à proposer un nouvel appareil de cuisson d'aliments, et en particulier un autocuiseur, de conception particulièrement simple, compacte et robuste.

Un autre objet de l'invention vise à proposer un nouvel appareil de cuisson d'aliments, et en particulier un autocuiseur, procurant à l'utilisateur une sensation de manipulation très spécifique lors du verrouillage du couvercle relativement à la cuve.

Un autre objet de l'invention vise à proposer un nouvel appareil de cuisson d'aliments, et en particulier un autocuiseur, particulièrement pratique à utiliser.

Les objets assignés à l'invention sont atteints à l'aide d'un appareil de cuisson d'aliments comprenant :
- une cuve et un couvercle,
- un moyen de verrouillage / déverrouillage mobile entre une position verrouillée dans laquelle il verrouille le couvercle relativement à la cuve et une position déverrouillée dans laquelle le couvercle est libre relativement à la cuve,
- et un organe de commande du déplacement dudit moyen de verrouillage / déverrouillage, ledit organe de commande étant mobile entre une position de verrouillage et une position de déverrouillage correspondant respectivement aux positions verrouillée et déverrouillée dudit moyen de verrouillage / déverrouillage,
l'organe de commande et le moyen de verrouillage / déverrouillage coopérant pour que la position instantanée du moyen de verrouillage / déverrouillage varie en fonction de la position instantanée de l'organe de commande selon une première loi lorsque l'organe de commande est déplacé de sa position de verrouillage vers sa position de déverrouillage, ledit appareil étant caractérisé en ce que l'organe de commande et le moyen de verrouillage / déverrouillage coopèrent pour que la position instantanée du moyen de verrouillage / déverrouillage varie en fonction de la position instantanée de l'organe de commande selon une deuxième loi, différente de la première loi, lorsque l'organe de commande est déplacé de sa position de déverrouillage vers sa position de verrouillage.

D'autres particularités et avantages de l'invention apparaîtront et ressortiront plus en détails à la lecture de la description faite ci-après, en référence aux dessins annexés, donnés à titre d'exemple illustratif et non limitatif, dans lesquels :
- La figure 1 illustre, selon une vue générale en perspective, un appareil de cuisson sous pression conforme à l'invention avec son moyen de verrouillage / déverrouillage en position verrouillée et son organe de commande en position de verrouillage.
- La figure 2 illustre, selon une vue en perspective, un détail de réalisation du montage du moyen de verrouillage / déverrouillage sur le couvercle de l'appareil de la figure 1.
- La figure 3 illustre, selon une vue en perspective, un détail de réalisation de l'appareil illustré à la figure 1.
- La figure 4 illustre, selon une vue de dessus, le détail de réalisation de la figure 3.
- La figure 5 illustre, selon une vue en perspective, le détail de réalisation de la figure 3 lorsque l'organe de commande a quitté sa position de verrouillage et est en cours de déplacement vers sa position de déverrouillage.
- La figure 6 illustre, selon une vue de dessus, le détail de réalisation de la figure 5, l'organe de commande étant omis par souci de clarté.
- La figure 7 illustre, selon une vue générale en perspective, l'appareil des figures 1 à 6 avec l'organe de commande en position de déverrouillage.
- La figure 8 illustre, selon une vue en perspective, un détail de réalisation de l'appareil illustré à la figure 7.
- La figure 9 illustre, selon une vue de dessus, le détail de réalisation de la figure 8, l'organe de commande étant omis par souci de clarté.
- La figure 10 illustre, selon une vue en coupe, le détail de réalisation de la figure 8.
- La figure 11 illustre, selon une vue en perspective, le détail de réalisation des figures 8 à 10 lorsque l'organe de commande a quitté sa position de déverrouillage et est en cours de déplacement vers sa position de verrouillage.
- La figure 12 illustre, selon une vue de coté, le détail de réalisation de la figure 11, l'organe de commande étant sur le point d'atteindre sa position de verrouillage.
- La figure 13 illustre, selon une vue de dessus, le détail de réalisation de la figure 12, l'organe de commande étant omis par souci de clarté.
- La figure 14 est un graphe illustrant la variation de la position instantanée du moyen de verrouillage / déverrouillage en fonction de la position instantanée de l'organe de commande pour un appareil similaire à celui des figures 1 à 13.

L'appareil 1 de cuisson d'aliments conforme à l'invention est destiné à assurer la cuisson de différents aliments, de préférence à un niveau de pression supérieur à la pression atmosphérique, auquel cas il constitue un appareil de cuisson sous pression, et de préférence un autocuiseur. La description qui suit sera exclusivement dirigée, par souci de concision, vers un tel appareil de cuisson sous pression, étant entendu que l'invention concerne également des appareils de cuisson à pression atmosphérique. Avantageusement, l'appareil 1 conforme à l'invention est conçu pour monter en pression exclusivement sous l'effet d'une source de chauffe (embarqué ou externe), sans apport de pression externe. De préférence l'appareil 1 est un appareil domestique, étant entendu que l'invention peut également concerner des appareils professionnels ou semi-professionnels. L'appareil 1 conforme à l'invention est donc avantageusement un ustensile de cuisine présentant un caractère portatif (c'est-à-dire qu'il peut être déplacé manuellement) et indépendant.

De façon classique, l'appareil 1 de cuisson conforme à l'invention comprend une cuve 2 formant récipient de cuisson et présentant avantageusement sensiblement une symétrie de révolution selon un axe X-X'. Par la suite, l'adjectif « *axial* » se réfèrera à la direction de cet axe de symétrie X-X', direction qui s'apparente à la direction verticale lorsque l'appareil 1 est en fonctionnement normal, c'est-à-dire repose sur un plan horizontal. La cuve 2 est de manière classique fabriquée à partir d'un matériau métallique tel que l'acier inoxydable, et est par exemple pourvu d'un fond thermo-conducteur 2A solidarisé à la cuve par toute technique appropriée (par exemple par frappe à chaud).

La cuve 2 peut comporter également des organes de préhension, tel que des poignées 2B, 2C préférentiellement au nombre de deux, et fixées sur la paroi latérale 2D de la cuve de façon diamétralement opposée par exemple.

L'appareil 1 conforme à l'invention comprend également un couvercle 3 destiné à être rapporté et verrouillé (à l'aide de moyens décrits ci-après) sur la cuve 2 pour former avec cette dernière une enceinte de cuisson qui est de préférence sensiblement étanche, c'est-à-dire suffisamment hermétique pour permettre une montée en pression de l'appareil 1. Le couvercle 3 est avantageusement de forme générale discoïde, et s'étend avantageusement dans un plan moyen sensiblement parallèle au plan moyen d'extension du fond 2A de la cuve 2 lorsqu'il est rapporté et verrouillé sur cette dernière.

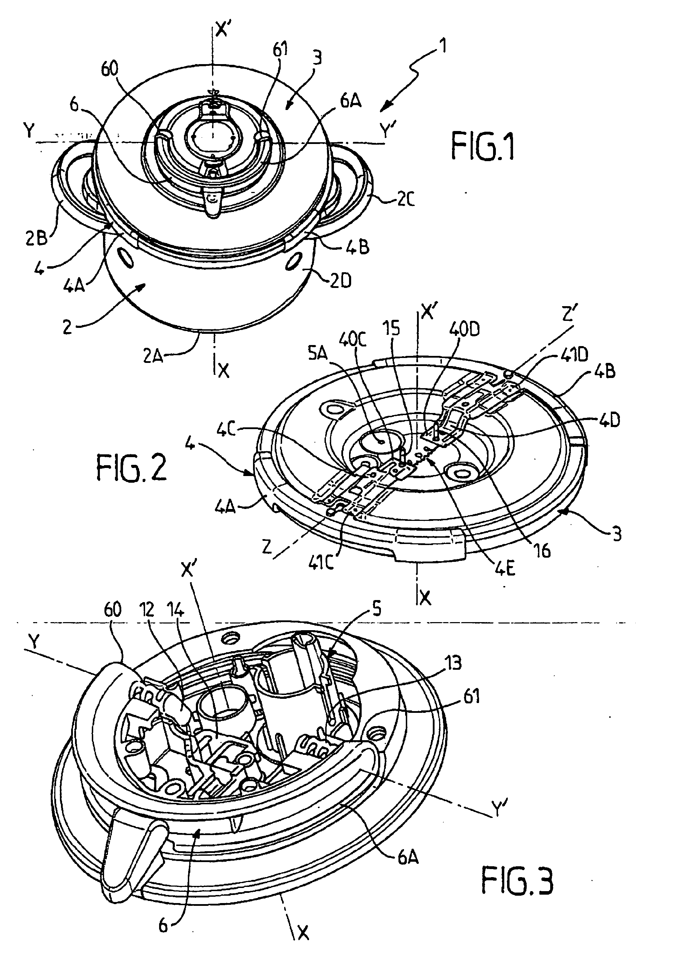

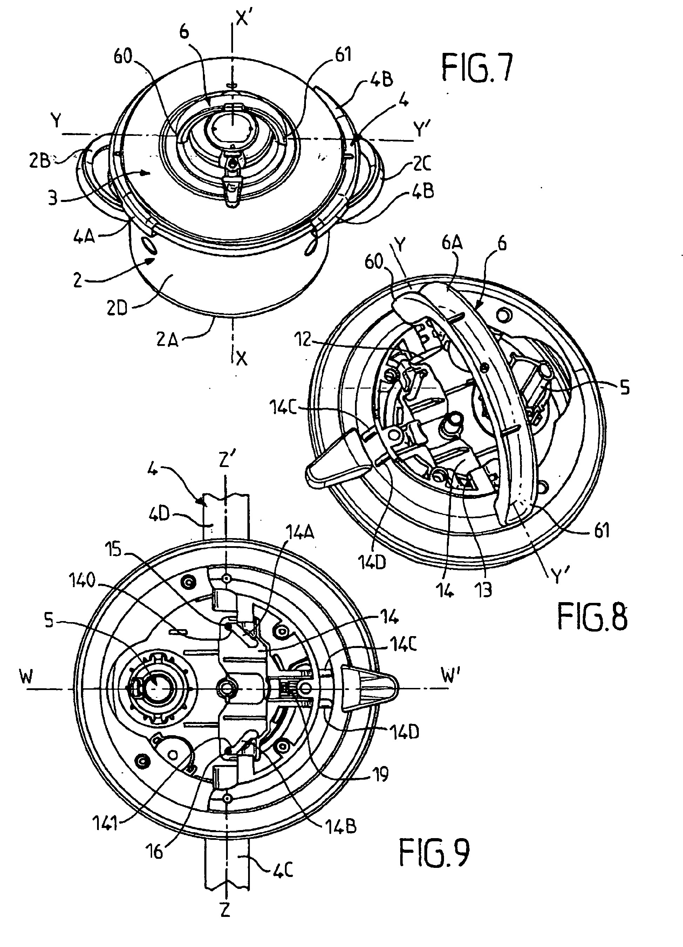

L'appareil 1 conforme à l'invention comprend en outre un moyen de verrouillage / déverrouillage 4 du couvercle 3 relativement à la cuve 2, grâce auquel le couvercle 3 peut donc être verrouillé ou déverrouillé sur la cuve 2. Le verrouillage du couvercle 3 sur la cuve 2 permet à l'enceinte de cuisson de monter en pression sans risque de voir le couvercle 3 échapper sous l'effet de la pression. Le moyen de verrouillage / déverrouillage 4 est mobile entre une position verrouillée (illustrée aux figures 1 et 2) dans laquelle il verrouille le couvercle 3 relativement à la cuve 2 et une position déverrouillée (illustrée à la figure 7) dans laquelle le couvercle 3 est libre relativement à la cuve 2, c'est-à-dire que le couvercle 3 est déverrouillé et peut être librement séparé de la cuve 2.

Avantageusement, le moyen de verrouillage / déverrouillage 4 est monté à coulissement sur le couvercle 3 selon un axe de coulissement Z-Z'. En d'autres termes, le moyen de verrouillage / déverrouillage 4 est avantageusement monté en translation sur le couvercle 3, et de préférence en translation radiale sur ledit couvercle 3 relativement à l'axe X-X'.

De façon préférentielle, le moyen de verrouillage / déverrouillage 4 est un moyen de verrouillage / déverrouillage à mâchoires ou à segments, étant entendu que l'invention n'est nullement limitée à un type particulier de moyen de verrouillage / déverrouillage.

Dans la variante préférentielle illustrée aux figures, le moyen de verrouillage / déverrouillage 4 du couvercle 3 relativement à la cuve 2 comprend deux mâchoires 4A, 4B montées mobiles en translation radiale sur et relativement au couvercle 3 par l'intermédiaire de bras entraîneurs correspondants 4C, 4D s'étendant de façon diamétralement opposée en regard de l'axe de symétrie général X-X' de l'appareil 1. Les mâchoires 4A, 4B sont ainsi montées, par l'intermédiaire des bras entraîneurs 4C, 4D, entre d'une part une position verrouillée dans laquelle chaque mâchoire 4A, 4B enserre le couvercle 3 et le bord supérieur roulé de la cuve 2 et d'autre part une position déverrouillée, obtenue par déplacement centrifuge des mâchoires 4A, 4B à partir de leur position verrouillée, et dans laquelle les mâchoires 4A, 4B ne sont plus en prise avec le bord roulé de la cuve 2, ce qui permet à l'utilisateur de désolidariser librement le couvercle 3 de la cuve 2. De préférence, la position verrouillée est une position de rappel, un tel effet de rappel étant obtenu par exemple grâce à l'interposition d'un ressort 4E reliant les bras entraîneurs 4C, 4D et rappelant ces derniers l'un vers l'autre. Chaque bras entraîneur 4C, 4D s'étend plus précisément entre une extrémité intérieure 40C, 40D destinée à coopérer avec un organe de commande 6 (comme expliqué plus en détails ci-après) et une extrémité extérieure 41C, 41 D qui porte la mâchoire correspondante 4A, 4B. Chaque mâchoire 4A, 4B se présente quant à elle avantageusement sous la forme d'une plaque métallique profilée en U, tel que cela est bien connu de l'homme du métier. II est cependant tout à fait envisageable que l'extrémité extérieure de chaque segment 4C, 4D ne porte pas de mâchoire et soit simplement destinée à pénétrer dans des lumières correspondantes ménagées dans la cuve 2, à la manière d'un système pêne/gâche. Un tel système de verrouillage de type pêne/gâche (non illustré), habituellement désigné sous l'appellation « *système de verrouillage* à *segments* », est bien connu en tant que tel, de sorte qu'il n'est pas nécessaire de le décrire plus avant ici.

L'appareil 1 de cuisson d'aliments sous pression conforme à l'invention comprend avantageusement un moyen de régulation de pression 5 monté en communication étanche avec un perçage correspondant 5A ménagé dans le couvercle 3 et agencé pour maintenir la pression relative (c'est-à-dire la pression mesurée au-dessus de la pression atmosphérique) régnant dans l'enceinte à une valeur prédéterminée sensiblement constante, dite pression de fonctionnement. Le principe de fonctionnement général d'un tel moyen de régulation 5 est bien connu de l'homme du métier, de sorte qu'il n'est pas nécessaire de le décrire plus avant ici. Avantageusement, le moyen de régulation 5 est pourvu d'un système de tarage permettant à l'utilisateur de sélectionner une valeur de pression de fonctionnement prédéterminée parmi un choix de plusieurs niveaux de pression de fonctionnement, via un organe de sélection de pression, en fonction par exemple de la nature des aliments présents dans l'appareil 1. Avantageusement, le moyen de régulation de pression 5 est conçu pour que la pression de fonctionnement soit comprise dans une plage s'étendant sensiblement entre 10 et 90 kPa.

Comme évoqué précédemment, l'appareil de cuisson d'aliments 1 conforme à l'invention comprend également un organe de commande 6 du déplacement dudit moyen de verrouillage / déverrouillage 4 du couvercle 3 relativement à la cuve 2. En d'autres termes, l'organe de commande 6 est un organe de commande du verrouillage/déverrouillage du couvercle 3 relativement à la cuve 2.

L'organe de commande 6 est à cet effet avantageusement conçu pour être manipulé, de préférence directement et manuellement, par l'utilisateur, de façon à permettre à ce dernier de contrôler le déplacement du moyen de verrouillage / déverrouillage 4, c'est-à-dire, dans la variante illustrée aux figures, le déplacement radial des bras entraîneurs 4C, 4D et des mâchoires correspondantes 4A, 4B.

Avantageusement, l'organe de commande 6 est conçu pour permettre à l'utilisateur de contrôler à la fois le verrouillage et le déverrouillage du couvercle 3 relativement à la cuve 2, c'est-à-dire que l'utilisateur dispose dans ce cas d'un organe de commande unique et commun lui permettant de verrouiller et de déverrouiller le couvercle 3 relativement à la cuve 2. Le recours à un organe de commande 6 unique pour commander à la fois le verrouillage et le déverrouillage permet de simplifier la conception et la construction de l'appareil 1, tout en facilitant l'utilisation de l'appareil.

L'organe de commande 6 est mobile entre une position de verrouillage (visible sur les figures 1 et 3) et une position de déverrouillage (visible sur les figures 7 à 10) correspondant respectivement aux positions verrouillée et déverrouillée dudit moyen de verrouillage / déverrouillage 4. En d'autres termes, l'organe de commande 6 est conçu pour pouvoir être déplacé manuellement par un utilisateur entre sa position de verrouillage et sa position de déverrouillage, et vice-versa. L'organe de commande 6 interagit avec le moyen de verrouillage / déverrouillage 4 pour que lorsque l'organe de commande 6 se trouve dans sa position de déverrouillage, le moyen de verrouillage / déverrouillage 4 se trouve en position déverrouillée, c'est-à-dire que le couvercle 3 peut être librement rapporté sur, et enlevé de, la cuve 2, tandis que lorsque l'organe 6 se trouve dans sa position de verrouillage, le moyen de verrouillage / déverrouillage 4 adopte alors sa position verrouillée empêchant la désolidarisation du couvercle 3 et de la cuve 2.

De préférence, l'organe de commande 6 est monté mobile sur et relativement au couvercle 3 entre ses positions de verrouillage et de déverrouillage. Plus précisément, l'organe de commande 6 est avantageusement monté à pivotement, entre ses positions de verrouillage et de déverrouillage, selon un axe de pivotement Y-Y'.

Ledit axe de pivotement Y-Y' s'étend lui-même de préférence selon une direction moyenne majoritairement parallèle au plan moyen d'extension du couvercle 3. Ledit axe de pivotement Y-Y' est donc avantageusement perpendiculaire à l'axe X-X', et est de façon préférentielle sensiblement parallèle à l'axe de coulissement Z-Z' du moyen de verrouillage / déverrouillage 4. Avantageusement, lesdits axes de pivotement Y-Y' et de coulissement Z-Z' appartiennent à des plans tous deux sensiblement parallèles au plan moyen d'extension du couvercle 3.

De façon avantageuse, afin de permettre une manipulation équilibrée du couvercle 3 et simplifier la conception globale de l'appareil 1, l'organe de commande 6 est centré sur le couvercle 3, de sorte que dans ce cas l'axe de pivotement Y-Y' est avantageusement sécant avec l'axe X-X' correspondant à la direction verticale. II est cependant tout à fait envisageable que l'axe de pivotement de l'organe de commande 6 s'étende selon une direction autre que celle illustré aux figures ; par exemple, l'axe de pivotement en question peut s'étendre parallèlement à l'axe X-X' et même être confondu avec ce dernier. Avantageusement, l'organe de commande 6 est conçu pour se déplacer selon un débattement angulaire sensiblement égal à 90° entre une position rabattue ou rétractée correspondant à la position de verrouillage, dans laquelle l'angle formé entre le plan moyen d'extension du couvercle 3 et le plan moyen d'extension de l'organe de commande 6 est sensiblement nul, et une position dépliée ou déployée, correspondant à la position de déverrouillage, dans laquelle l'angle entre le plan moyen d'extension du couvercle 3 et le plan moyen d'extension de l'organe de commande 6 est sensiblement de 90°.

Avantageusement, l'organe de commande 6 comprend une anse 6A, c'est-à-dire une pièce en forme de boucle, de préférence arquée, avantageusement conçue pour être saisie fermement et à pleine main par l'utilisateur. L'anse 6A est avantageusement conçue pour faire saillie du couvercle 3 en position déployée, et pour être rabattue contre le couvercle 3 en position rétractée, comme illustré aux figures.

Le recours à un organe de commande 6 en forme d'anse 6A est particulièrement préféré, car il permet une prise particulièrement ferme et assurée par l'utilisateur, tout en étant facilement escamotable. De préférence, l'organe de commande 6 présente sensiblement un contour en arc de cercle, comme illustré aux figures. Dans ce cas, ladite anse 6A s'étend avantageusement selon un contour sensiblement hémicirculaire entre une première extrémité 60 et une deuxième extrémité 61 sensiblement traversées par ledit axe de pivotement Y-Y', lesdites première et deuxième extrémités 60, 61 étant ainsi disposées de façon sensiblement diamétralement opposée relativement à l'axe X-X'. En d'autres termes, l'anse 6A présente dans ce cas sensiblement une forme d'arche correspondant avantageusement à un demi-cercle dont le diamètre est choisi pour permettre à l'utilisateur de glisser, dans l'orifice 6B délimité par ladite arche et le couvercle 3, au moins deux doigts (par exemple l'index et le majeur), et de préférence au moins trois doigts (index, majeur et annulaire), un espace suffisant pour permettre l'introduction de quatre doigts (index, majeur, annulaire et auriculaire) étant préféré.

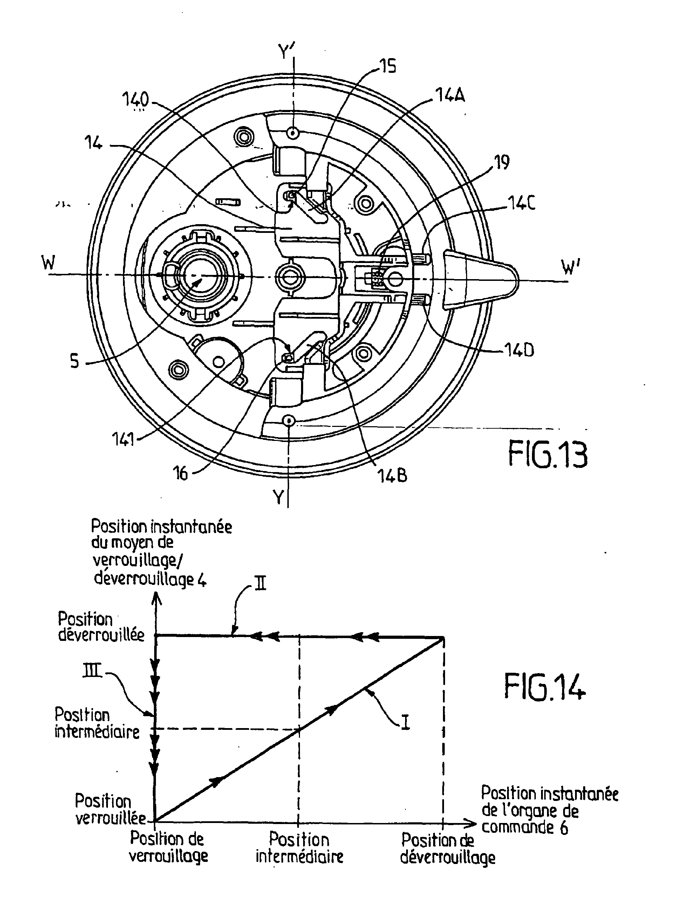

Conformément à l'invention, l'organe de commande 6 et le moyen de verrouillage / déverrouillage 4 coopèrent pour que la position instantanée du moyen de verrouillage / déverrouillage 4 varie en fonction de la position instantanée de l'organe de commande 6 selon une première loi lorsque l'organe de commande 6 est déplacé de sa position de verrouillage vers sa position de déverrouillage. En d'autres termes, le déplacement de l'organe de commande 6 à partir de sa position de verrouillage en direction de sa position de déverrouillage et jusqu'à cette dernière entraîne le déplacement du moyen verrouillage / déverrouillage 4 à partir de sa position verrouillée en direction et jusqu'à sa position déverrouillée selon un mode spécifique de déplacement, qui peut être exprimé par une expression mathématique liant la position instantanée du moyen de verrouillage / déverrouillage 4 à la position instantanée de l'organe de commande 6. Cela signifie que la position instantanée du moyen de verrouillage / déverrouillage 4 est fonction de la position instantanée de l'organe de commande 6, cette fonction correspondant à ladite première loi lorsque l'organe de commande 6 est déplacé de sa position de verrouillage vers sa position de déverrouillage. Avantageusement, ladite première loi impose que la distance séparant la position instantanée du moyen de verrouillage / déverrouillage de sa position verrouillée croisse avec la distance séparant la position instantanée de l'organe de commande 6 de sa position de verrouillage. En d'autres termes, le déplacement de l'organe de commande 6 de sa position de verrouillage vers sa position de déverrouillage entraîne le déplacement concomitant du moyen de verrouillage / déverrouillage 4 de sa position verrouillée vers sa position déverrouillée. Ainsi, le moyen de verrouillage / déverrouillage 4 se rapproche progressivement de sa position déverrouillée au fur et à mesure que l'organe de commande 6 se rapproche de sa position de déverrouillage. La première loi est donc avantageusement une fonction monotone, et plus précisément une fonction croissante liant la position instantanée de l'organe de commande 6, en tant qu'antécédent, à la position instantanée du moyen de verrouillage / déverrouillage 4 en tant qu'image au sens mathématique de ces termes. Avantageusement, la première loi impose que la distance séparant la position instantanée du moyen de verrouillage / déverrouillage 4 de sa position verrouillée varie proportionnellement à la distance séparant la position instantanée de l'organe de commande 6 de sa position de verrouillage. En d'autres termes, la position instantanée du moyen de verrouillage / déverrouillage 4 est reliée à la position instantanée de l'organe de commande 6 par une fonction linéaire, illustrée sur la figure 14, par la droite I repérée par des flèches simples, ces dernières illustrant le sens de déplacement de l'organe de commande 6 de sa position de verrouillage à sa position de déverrouillage.

La réalisation d'un tel déplacement progressif du moyen de verrouillage / déverrouillage 4 vers sa position déverrouillée sous l'effet du déplacement progressif de l'organe de commande 6 de sa position de verrouillage vers sa position de déverrouillage est bien connue en tant que telle, et peut par exemple être obtenue à l'aide de moyens de liaison mécanique entre l'organe de commande 6 et le moyen de verrouillage / déverrouillage 4 qui sont bien connus et qui seront décrits plus en détails dans ce qui suit.

Conformément à l'invention, l'organe de commande 6 et le moyen de verrouillage / déverrouillage 4 coopèrent pour que la position instantanée du moyen de verrouillage / déverrouillage 4 varie en fonction de la position instantanée de l'organe de commande 6 selon une deuxième loi, différente de la première loi, lorsque l'organe de commande 6 est déplacé de sa position de déverrouillage vers sa position de verrouillage.

En d'autres termes, lorsque l'organe de commande 6 est déplacé à partir de sa position de déverrouillage en direction et jusqu'à sa position de verrouillage, il impartit un déplacement du moyen de verrouillage / déverrouillage 4 qui est différent du déplacement qu'il impartissait en sens inverse, c'est-à-dire lorsque l'organe de commande 6 se déplaçait à partir de sa position de verrouillage vers sa position de déverrouillage. La fonction mathématique, correspondant à la deuxième loi, liant la position instantanée du moyen de verrouillage / déverrouillage 4 à la position instantanée de l'organe de commande 6 est donc différente de la fonction mathématique correspondant à la première loi. En d'autres termes, l'invention consiste de ce point de vue à établir entre le moyen de verrouillage / déverrouillage 4 et l'organe de commande 6 une liaison mécanique qui est différente selon que l'organe de commande 6 est actionné à partir de sa position de verrouillage vers sa position de déverrouillage ou inversement à partir de sa position de déverrouillage vers sa position de verrouillage. Cela signifie que l'organe de commande 6 passe, lorsqu'il se déplace de sa position de verrouillage à sa position de déverrouillage et inversement, par au moins une position intermédiaire à laquelle correspond au moins deux positions distinctes du moyen de verrouillage / déverrouillage 4, la première de ces positions étant atteinte lors du déplacement de l'organe de commande 6 à partir de sa position de verrouillage vers sa position de déverrouillage, tandis que la deuxième position est atteinte lors du déplacement de l'organe de commande 6 à partir de sa position de déverrouillage vers sa position de verrouillage. Dans l'exemple illustré aux figures, un exemple d'une telle position intermédiaire de l'organe de commande 6 correspond ainsi, dans le sens du déverrouillage, à une position intermédiaire du moyen de verrouillage / déverrouillage 4 par lequel passe ce dernier de sa position verrouillée à sa position déverrouillée, et, dans le sens du verrouillage, à la position déverrouillée du moyen de verrouillage / déverrouillage 4.

De ce point de vue, l'invention peut être ainsi définie comme concernant un appareil 1 de cuisson d'aliments comprenant :
- un moyen de verrouillage / déverrouillage 4 mobile entre une position verrouillée dans laquelle il verrouille le couvercle 3 relativement à la cuve 2 et une position déverrouillée dans laquelle le couvercle 3 est libre relativement à la cuve 2,
- un organe de commande 6 du déplacement dudit moyen de verrouillage / déverrouillage 4, ledit organe de commande 6 étant lui-même mobile entre une position de verrouillage et une position de déverrouillage correspondant respectivement aux positions verrouillée et déverrouillée dudit moyen de verrouillage / déverrouillage 4, ledit organe de commande 6 passant par une position intermédiaire lorsqu'il se déplace de sa position de verrouillage à sa position de déverrouillage et inversement,
l'organe de commande 6 et le moyen de verrouillage / déverrouillage 4 coopérant pour que lorsque l'organe de commande 6 atteint ladite position intermédiaire à partir de sa position de verrouillage, le moyen de verrouillage / déverrouillage 4 se trouve dans une première position, tandis que lorsque l'organe de commande 6 atteint ladite position intermédiaire à partir de sa position de déverrouillage, le moyen de verrouillage / déverrouillage 4 se trouve dans une deuxième position qui est différente de la première position.

L'invention permet ainsi de différencier la course du moyen, de verrouillage /déverrouillage 4 selon qu'il est entraîné en position verrouillée ou en position déverrouillée, ce qui donne une indication de fonctionnement à l'utilisateur et facilite l'utilisation du produit, sans pour autant qu'il ne soit nécessaire de recourir à deux organes distincts pour commander le verrouillage d'une part et le déverrouillage d'autre part. En d'autres termes, le verrouillage / déverrouillage s'effectue selon un cycle d'hystérésis.

Avantageusement, et comme illustré à la figure 14, ladite deuxième loi impose que le moyen de verrouillage déverrouillage 4 reste en position déverrouillée tant que l'organe de commande 6 n'a sensiblement pas atteint sa position de verrouillage, le moyen de verrouillage / déverrouillage 4 retournant brusquement dans sa position verrouillée seulement lorsque l'organe de commande 6 atteint sensiblement sa position de verrouillage. Cette deuxième loi est schématisée par les courbes II et III de la figure 14, respectivement repérées par une double flèche et une triple flèche illustrant le sens de déplacement de l'organe de commande 6.

Ainsi, grâce à la cinématique spécifique que cette deuxième loi impose au moyen de verrouillage / déverrouillage 4, le verrouillage de l'appareil 1 s'effectue de manière franche et sensiblement non progressive, contrairement au déverrouillage qui lui est avantageusement progressif, ce qui permet à l'utilisateur de percevoir clairement que l'opération de verrouillage a été correctement réalisée. Une telle fermeture franche, qui implique la rétractation brutale des mâchoires 4A, 4B en position verrouillée, peut également fournir une information sonore du verrouillage à l'utilisateur, le caractère brutal du verrouillage étant en effet de nature à entraîner un bruit de choc (par exemple des mâchoires 4A, 4B contre le bord latéral du couvercle 3) caractéristique du verrouillage.

L'invention n'est bien entendu absolument pas limitée à un appareil 1 mettant en oeuvre une cinématique de verrouillage / déverrouillage uniquement conforme au graphe de la figure 14. II est par exemple tout à fait envisageable que la droite I soit remplacée par une courbe de toute forme, de même que les droites II et III.

Avantageusement, le déplacement du moyen de verrouillage / déverrouillage 4 est commandé par l'organe de commande 6 par l'intermédiaire d'une pièce de transmission 14 interposée entre lesdits moyens de verrouillage / déverrouillage 4 et organe de commande 6, ladite pièce de transmission 14 étant mobile relativement audit moyen de verrouillage / déverrouillage 4 et organe de commande 6 entre une première position correspondant à la position déverrouillée du moyen de verrouillage / déverrouillage 4 et une deuxième position correspondant à la position verrouillée du moyen de verrouillage / déverrouillage 4. La pièce de transmission 14 est donc avantageusement distincte à la fois du moyen de verrouillage / déverrouillage 4 et de l'organe de commande 6, et reliée fonctionnellement auxdits moyen de verrouillage / déverrouillage 4 et organe de commande 6 pour transmettre, et de préférence convertir, le mouvement de l'organe de commande 6 en mouvement du moyen de verrouillage / déverrouillage 4.

Le recours à une telle pièce intermédiaire est particulièrement avantageux dans la mesure où il facilite la mise en oeuvre du principe général sous-tendant l'invention, savoir la mise en oeuvre d'une loi de déplacement du moyen de verrouillage / déverrouillage 4 qui change avec la direction de déplacement de l'organe de commande 6. Le recours à une telle pièce intermédiaire, constituée par la pièce de transmission 14, permet également d'obtenir le cas échéant des effets de démultiplication d'effort pour faciliter la manoeuvre de l'appareil 1 par l'utilisateur.

De préférence, la pièce de transmission 14 est constituée par une plaque de commande intermédiaire qui s'étend majoritairement dans un plan moyen d'extension parallèle au plan moyen d'extension du couvercle 3, ledit plan moyen étant lui-même parallèle au plan de la feuille sur laquelle est par exemple dessinée la figure 13.

De préférence, la pièce de transmission 14 est montée à translation sur le couvercle 3 selon un axe de translation W-W', lequel est de préférence sensiblement perpendiculaire à l'axe de pivotement Y-Y'. Ainsi, les axes de coulissement Z-Z', de translation W-W' et de pivotement Y-Y' s'étendent avantageusement chacun dans des plans qui sont tous parallèles les uns aux autres, et qui peuvent être éventuellement confondus, auquel cas les axes en question W-W', Y-Y' et Z-Z' sont coplanaires.

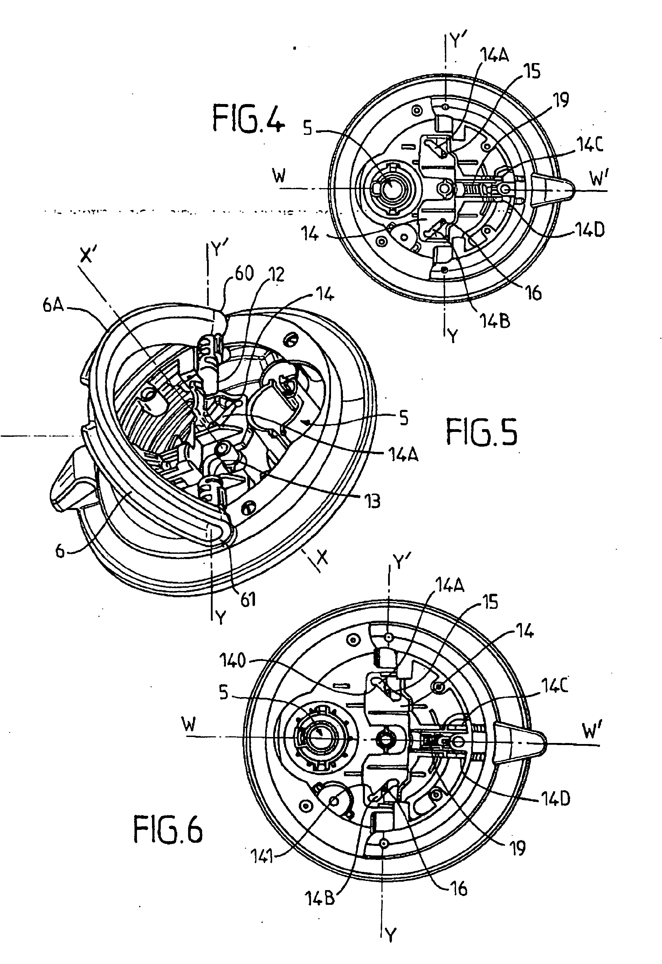

Avantageusement, la deuxième position de la pièce-de transmission 14 (illustrée aux figures 3 et 4) qui correspond à la position verrouillée du moyen de verrouillage / déverrouillage 4, est une position de rappel.

Cela signifie que la pièce de transmission 14 est avantageusement soumise à une contrainte élastique permanente la ramenant dans sa deuxième position, cette dernière constituant donc une position d'équilibre stable. Un tel effet de rappel de la pièce de transmission 14 dans sa deuxième position est par exemple obtenu à l'aide d'un ressort de rappel 19 (perceptible sur les vues de dessus des figures 4, 6, 9 et 13} qui pousse en permanence la pièce de transmission 14 vers sa deuxième position. Plus précisément, la pièce de transmission 14 est avantageusement montée à translation selon l'axe W-W' sur une platine 10 elle-même fixée au couvercle 3, le ressort de rappel 19 étant interposé entre la platine 10 et la pièce de transmission 14 pour repousser en permanence cette dernière vers sa deuxième position.

Avantageusement, la première position de la pièce de transmission 14 est quant à elle une position d'équilibre instable, en dehors de laquelle la pièce de transmission 14 est rappelée dans sa deuxième position. En d'autres termes, l'appareil 1 comporte des moyens permettant d'immobiliser la pièce de-transmission 14 dans sa première position. En revanche, lorsque sous l'effet d'une sollicitation appropriée la pièce de transmission 14 est écartée de sa deuxième position, ladite pièce de transmission 14 ne revient pas naturellement dans sa première position mais est au contraire rappelée dans sa deuxième position, sous l'effet par exemple du ressort de rappel 19.

Avantageusement, l'organe de commande 6 et la pièce de transmission 14 coopèrent pour que l'organe de commande 6 exerce, lorsqu'il se déplace de sa position de verrouillage à sa position de déverrouillage (droite I du graphe de la figure 14), un effort sur la pièce de transmission 14 entraînant cette dernière de sa deuxième position à sa première position, la pièce de transmission 14 entraînant elle-même en retour le moyen de verrouillage / déverrouillage 4 de sa position verrouillée à sa position déverrouillée.

De préférence, comme illustré aux figures, l'organe de commande 6 est pourvu à cet effet d'au moins une came (et en l'espèce de deux cames 12, 13 dans l'exemple illustré aux figures) contre laquelle la pièce de transmission 14 est en permanence rappelée lorsqu'elle se trouve hors de sa première position. Avantageusement, l'organe -de commande 6 comporte deux cames 12, 13 montées respectivement aux extrémités 60, 61 de l'anse 6A formant organe de commande 6.

Le rappel de la pièce de transmission 14 contre la came 12, 13 est avantageusement réalisé par le même ressort 19 qui rappelle la pièce de transmission 14 dans sa deuxième position. Le ressort 4E rappelant les bras entraîneurs 4C, 4D en position verrouillée peut également contribuer à exercer un effort de rappel sur la pièce de transmission 14, comme cela est bien connu en tant que tel.

Avantageusement, la came 12, 13 est conçue pour pousser la pièce de transmission 14 vers sa première position sous l'effet du déplacement de l'organe de commande 6 vers sa position de déverrouillage.

Dans le mode de réalisation illustré aux figures, chaque came 12, 13 pivote avec l'anse 6A autour de l'axe Y-Y', ce pivotement de chaque came 12, 13 permettant à ces dernières de venir repousser, grâce à leur forme asymétrique autour de l'axe Y-Y', la pièce de transmission 14 vers et jusqu'à sa première position sous l'effet du déplacement de l'organe de-commande 6 de sa position de verrouillage jusqu'à sa position de déverrouillage. Une fois que la pièce de transmission 14 a atteint sa première position, ladite pièce de transmission 14 est immobilisée dans cette première position par tous moyens appropriés, et par exemple par des moyens qui seront décrits plus en détails dans ce qui suit.

Avantageusement, l'organe de commande 6 et la pièce de transmission 14 coopèrent pour que :
- lorsque l'organe de commande 6 se déplace de sa position de déverrouillage vers sa position de verrouillage et tant qu'il n'a pas atteint cette dernière, ledit organe de commande 6 n'exerce sensiblement aucun effort sur la pièce de transmission 14 susceptible d'entraîner cette dernière hors de sa première position,
- et dès que l'organe de commande 6 atteint sa position de verrouillage à partir de sa position de déverrouillage, ledit organe de commande 6 exerce un effort sur la pièce de transmission 14 suffisant pour que cette dernière quitte sa première position, et soit alors avantageusement rappelée automatiquement vers et dans sa deuxième position comme expliqué précédemment, ce qui entraîne le verrouillage brusque et concomitant du couvercle 3 sur la cuve 2.

Un tel fonctionnement est avantageusement obtenu grâce à une liaison par appui simple de l'organe de commande 6 et de la pièce de transmission 14, l'appui simple en question permettant de repousser la pièce de transmission 14 jusque dans sa première position, puis, une fois cette première position atteinte, d'autoriser l'organe de commande 6 à revenir dans sa position de verrouillage sans exercer d'effort sur la pièce de transmission 14, à laquelle il était lié uniquement par un appui simple, libre.

Le fonctionnement de la variante particulière illustrée aux figures va maintenant être décrit chronologiquement.

Tout d'abord, l'appareil 1 est en configuration de cuisson, c'est-à-dire que son couvercle 3 est rapporté et verrouillé, grâce aux moyens de verrouillage / déverrouillage 4, sur la cuve 2.

Dans cette configuration illustrée aux figures 1 à 4, l'organe de commande 6, comprenant en l'espèce l'anse 6A, se trouve en position de verrouillage.

A la fin du cycle de cuisson, et une fois que l'appareil 1 est dépressurisé par tous moyens connus, il est possible à l'utilisateur, et sous réserve que les moyens de sécurité à l'ouverture de l'appareil 1 l'y autorise, de ramener l'anse 6A dans sa position de déverrouillage, par pivotement selon une course angulaire de 90° en sens horaire autour de l'axe de pivotement Y-Y'. Ce trajet de la position de verrouillage vers la position de déverrouillage est illustré aux figures 5 et 6. La rotation de l'anse 6A de sa position de verrouillage à sa position de déverrouillage entraîne la rotation concomitante de la paire de came 12, 13 montée respectivement aux première et deuxième extrémités 60, 61 de l'anse 6A. Chaque came 12, 13 vient ainsi pousser simultanément sur la pièce de transmission 14, laquelle se trouvait initialement dans sa deuxième position. Sous l'effet de l'effort de poussée exercé, en appui libre, par les cames 12, 13, la pièce de transmission 14 se déplace en translation sur la platine 10 selon l'axe de translation W-W' perpendiculaire à la fois à l'axe de pivotement Y-Y' et à l'axe de symétrie global X-X': Afin de garantir un contact fonctionnel permanent entre les cames 12, 13 et la pièce de transmission 14 (qui sont uniquement liées par un appui libre), cette dernière est soumise à faction du ressort de rappel 19 qui pousse en permanence la pièce de transmission 14 contre lesdites cames 12, 13.

La pièce de transmission 14 est avantageusement pourvue de lumières 14A, 14B qui s'étendent de façon oblique et symétrique par rapport à l'axe de translation W-W'. Lesdites lumières obliques 14A, 14B coopèrent avec des ergots 15, 16 reliés respectivement aux bras entraîneurs 4C, 4D, vers l'extrémité intérieure de ces derniers.

Ainsi, le déplacement en translation de la pièce de transmission 14 entraîne, par l'intermédiaire des lumières 14A, 14B, le déplacement radial centrifuge des ergots 15, 16, et donc des bras entraîneurs 4C, 4D auxquels ces derniers sont respectivement attachés. Un tel principe de commande du déplacement radial des bras entraîneurs 4C, 4D est bien connu en tant que tel, et est par exemple décrit dans le document FR-2 863 849A1.

Ainsi, dans cette phase de déverrouillage obtenue par rotation à 90° de l'anse 6A de sa position de-verrouillage à sa position de déverrouillage, la pièce de transmission 14 transforme le mouvement de pivotement de l'anse 6A autour de l'axe Y-Y' en mouvement de translation radiale centrifuge des bras entraîneurs 4C, 4D, ce qui écarte les mâchoires 4A, 4B du bord roulé de la cuve 2. Le trajet de l'anse 6A se poursuit jusqu'à ce que l'anse 6A atteigne une position de butée (représentée par exemple aux figures 7, 8 et 10) dans laquelle ladite anse 6A s'étend verticalement au droit du couvercle 3. Cette position correspond à l'écartement mutuel maximal des mâchoires 4A, 4B, écartement qui correspond à la position de déverrouillage. Le passage de l'organe de commande 6 de sa position de verrouillage à sa position de déverrouillage et le passage correspondant du moyen de verrouillage / déverrouillage 4 de sa position verrouillée à sa position déverrouillée est illustré par la droite I de la figure 14, qui montre que les mâchoires 4A, 4B s'ouvrent progressivement au fur et à mesure que l'anse 6A pivote de sa position de verrouillage à sa position de déverrouillage. Une fois l'anse 6A en position de déverrouillage, le moyen de verrouillage / déverrouillage 4 atteint lui-même sa position déverrouillée. La position de déverrouillage de l'organe de commande 6 est avantageusement une position stable, grâce par exemple à l'action de pions verticaux coulissants 17, 18 qui pénètrent dans une contre-forme appropriée ménagée dans l'anse 6A, vers l'extrémité correspondante 60, 61 de cette dernière.

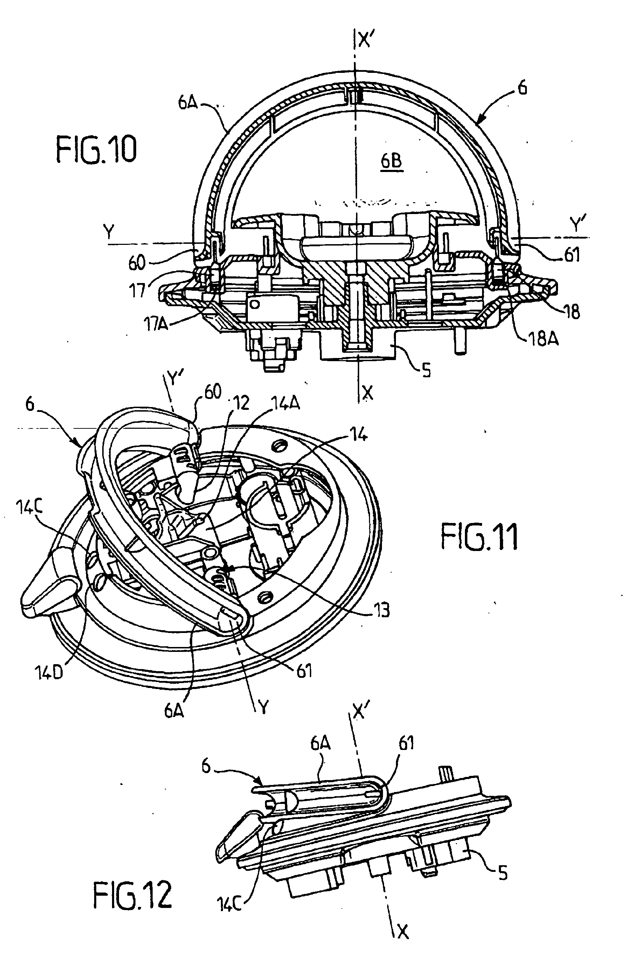

A cette fin, chaque pion 17, 18 est monté à translation verticale sur la platine 10 et est soumis à l'action d'un ressort de rappel correspondant 17A, 18A qui pousse en permanence chaque pion 17, 18 contre l'anse 6A et maintient ainsi cette dernière dans sa position de déverrouillage. L'utilisateur peut ensuite, afin par exemple de faciliter le rangement du couvercle 3 ou son placement dans un lave-vaisselle, rabattre l'anse 6A, c'est-à-dire faire revenir cette dernière dans sa position de verrouillage. A cette fin, l'utilisateur fait pivoter en sens anti-horaire l'anse 6A de 90° à partir de sa position de déverrouillage jusqu'à sa position de verrouillage. Ce trajet est illustré par les figures 11 et 12, ainsi que par les droites II et III de la figure 14. Dès que l'anse 6A a quitté sa position de verrouillage, le contact entre les cames 12, 13 et la pièce de transmission 14 est rompu, comme cela est plus particulièrement visible sur la figure 11. En effet, la partie active de chaque came 12, 13 s'éloigne, sous l'effet de la rotation autour de l'axe Y-Y', de la pièce de transmission 14, laquelle est immobilisée dans sa première position d'équilibre instable. Cet effet d'immobilisation de la pièce de transmission 14 dans sa première position est avantageusement obtenu par une conformation appropriée des lumières 14A, 14B, qui forment un léger coude 140, 141 permettant, en coopération avec l'effet de rappel exercé par le ressort 4E sur le pion 15, 16, d'immobiliser la pièce de transmission 14. Une telle conformation des lumières 14A, 14B pour immobiliser une telle pièce de transmission est bien connue en tant que telle, et ne nécessite donc pas d'être décrite plus avant ici. A l'approche de sa position de verrouillage, comme illustré à la figure 12, l'anse 6A vient appuyer sur une gâchette constituée en l'espèce de deux nervures arrondies 14C, 14D solidaires de la pièce de transmission 14. L'anse 6A, en appuyant sur ses nervures 14C, 14D repousse, en translation selon l'axe de translation W-W', la pièce de transmission 14 hors de sa première position d'équilibre instable de sorte que sous l'effet de l'action du ressort 19, et éventuellement de celle du ressort rappelant les bras entraîneurs 4C, 4D l'un vers l'autre, la pièce de transmission 14 est brutalement propulsée jusque dans sa deuxième position de rappel correspondant au verrouillage du couvercle 3 sur la cuve 2. Ce mouvement de verrouillage brutal est illustré par la droite sensiblement verticale III du graphe de la figure 14.

L'appareil 1 conforme à l'invention est ainsi avantageusement progressif au déverrouillage et bistable au verrouillage. Il est ainsi possible, par rotation_{.}d'un quart de tour de l'anse 6A de passer d'un état stable de verrouillage à un état stable de déverrouillage par déplacement progressif et asservi des différents éléments composant le mécanisme de verrouillage / déverrouillage décrit dans ce qui précède, un mouvement en sens inverse de l'anse 6A n'enclenchant le passage de l'état déverrouillé à l'état verrouillé qu'en fin de course angulaire de l'arche 6A, par déclenchement automatique du verrouillage comme décrit précédemment.

## Revendications

1. Appareil (1) de cuisson d'aliments comprenant :
- une cuve (2) et un couvercle (3),
- un moyen de verrouillage / déverrouillage (4) mobile entre une position verrouillée dans laquelle il verrouille le couvercle (3) relativement à la cuve (2) et une position déverrouillée dans laquelle le couvercle (3) est libre relativement à la cuve (2),
- et un organe de commande (6) du déplacement dudit moyen de verrouillage / déverrouillage (4), ledit organe de commande (6) étant mobile entre une position de verrouillage et une position de déverrouillage correspondant respectivement aux positions verrouillée et déverrouillée dudit moyen de verrouillage / déverrouillage (4),
l'organe de commande (6) et le moyen de verrouillage / déverrouillage (4) coopérant pour que la position instantanée du moyen de verrouillage / déverrouillage (4) varie en fonction de la position instantanée de l'organe de commande (6) selon une première loi (I) lorsque l'organe de commande (6) est déplacé de sa position de verrouillage vers sa position de déverrouillage, ledit appareil (1) étant **caractérisé en ce que** l'organe de commande (6) et le moyen de verrouillage / déverrouillage (4) coopèrent pour que la position instantanée du moyen de verrouillage / déverrouillage (4) varie en fonction de la position instantanée de l'organe de commande (6) selon une deuxième loi (II, III), différente de la première loi (I), lorsque l'organe de commande (6) est déplacé de sa position de déverrouillage vers sa position de verrouillage.

2. Appareil (1) selon la revendication 1 **caractérisé en ce que** ladite première loi (I) impose que la distance séparant la position instantanée du moyen de verrouillage / déverrouillage (4) de sa position verrouillée croisse avec la distance séparant la position instantanée de l'organe de commande (6) de sa position de verrouillage.

3. Appareil (1) selon la revendication 1 ou 2 **caractérisé en ce que** ladite deuxième loi (II, III) impose que le moyen de verrouillage / déverrouillage (4) reste en position déverrouillée tant que l'organe de commande (6) n'a sensiblement pas atteint sa position de verrouillage.

4. Appareil (1) selon l'une des revendications 1 à 3 **caractérisé en ce que** le déplacement dudit moyen de verrouillage/déverrouillage (4) est commandé par ledit organe de commande (6) par l'intermédiaire d'une pièce de transmission (14) interposée entre lesdits moyens de verrouillage / déverrouillage (4) et organe de commande (6), ladite pièce de transmission (14) étant mobile relativement auxdits moyens de verrouillage / déverrouillage (4) et organe de commande (6) entre une première position correspondant à la position déverrouillée et une deuxième position correspondant à la position verrouillée.

5. Appareil (1) selon la revendication 4 **caractérisé en ce que** la deuxième position de la pièce de transmission (14) est une position de rappel, tandis que la première position est une position d'équilibre instable en dehors de laquelle la pièce de transmission (14) est rappelée dans sa deuxième position.

6. Appareil (1) selon la revendication 4 ou 5 **caractérisé en ce que** l'organe de commande (6) et la pièce de transmission (14) coopèrent pour que l'organe de commande (6) exerce, lorsqu'il se déplace de sa position de verrouillage à sa position de déverrouillage, un effort sur la pièce de transmission (14) entraînant cette dernière de sa deuxième position à sa première position.

7. Appareil (1) selon les revendications 5 et 6 **caractérisé en ce que** ledit organe de commande (6) est pourvu d'au moins une came (12, 13) contre laquelle la pièce de transmission (14) est en permanence rappelée lorsqu'elle se trouve hors de sa première position, ladite came (12, 13) étant conçue pour pousser la pièce de transmission (14) vers sa première position sous l'effet du déplacement de l'organe de commande (6) vers sa position de déverrouillage.

8. Appareil (1) selon l'une des revendications 4 à 7 **caractérisé en ce que** l'organe de commande (6) et la pièce de transmission (14) coopèrent pour que:
- lorsque l'organe de commande (6) se déplace de sa position de déverrouillage vers sa position de verrouillage et tant qu'il n'a pas atteint cette dernière, ledit organe de commande (6) n'exerce aucun effort sur la pièce de transmission (14) susceptible d'entraîner cette dernière hors de sa première position,
- et dès que l'organe de commande (6) atteint sa position de verrouillage à partir de sa position de déverrouillage, ledit organe de commande (6) exerce un effort sur la pièce de transmission (14) suffisant pour que cette dernière quitte sa première position.

9. Appareil (1) selon l'une des revendications 1 à 8 **caractérisé en ce que** ledit organe de commande (6) est monté à pivotement sur le couvercle (3) selon un axe de pivotement (Y-Y').

10. Appareil (1) selon l'une des revendications 4 à 7 **caractérisé en ce que** la pièce de transmission (14) est monté à translation sur le couvercle (3) selon un axe de translation (W-W').

11. Appareil (1) selon les revendications 9 et 10 **caractérisé en ce que** ledit axe de pivotement (Y-Y') est sensiblement perpendiculaire audit axe de translation (W-W').

12. Appareil (1) selon l'une des revendications 1 à 11 **caractérisé en ce que** le moyen de verrouillage / déverrouillage (4) est monté à coulissement sur le couvercle (3) selon un axe de coulissement (Z-Z').

13. Appareil selon l'une des revendications 1 à 12 **caractérisé en ce qu'**il constitue un autocuiseur.

## Claims

1. A food-cooking utensil (1) comprising:
a vessel (2) and a lid (3);
locking/unlocking means (4) mounted to move between a locked position in which they lock the lid (3) relative to the vessel (2) and an unlocked position in which the lid (3) is free relative to the vessel (2); and
a control member (6) for controlling the movement of said locking/unlocking means (4), said control member (6) itself being mounted to move between a locking position and an unlocking position, which positions correspond respectively to the locked and to the unlocked positions of said locking/unlocking means (4);
the control member (6) and the locking/unlocking means (4) co-operating so that the instantaneous position of the locking/unlocking means (4) varies as a function of the instantaneous position of the control member (6) in a first relationship (I) while the control member (6) is being moved from its locking position towards its unlocking position, said utensil (1) being **characterized in that** the control member (6) and the locking/unlocking means (4) co-operate so that the instantaneous position of the locking/unlocking means (4) varies as a function of the instantaneous position of the control member (6) in a second relationship (II, III) that is different from the first relationship (I) while the control member (6) is being moved from its unlocking position towards its locking position.

2. A utensil (1) according to claim 1, **characterized in that** said first relationship (I) constrains the distance between the instantaneous position of the locking/unlocking means (4) and the locked position thereof to increase with increasing distance between the instantaneous position of the control member (6) and the locking position thereof.

3. A utensil (1) according to claim 1 or claim 2, **characterized in that** said second relationship (II, III) constrains the locking/unlocking means (4) to remain in the locked position so long as the control member (6) has substantially not reached its locking position.

4. A utensil (1) according to any one of claims 1 to 3, **characterized in that** said locking/unlocking means (4) are caused to move by said control member (6) via a transmission part (14) interposed between said locking/unlocking means (4) and said control member (6), said transmission part (14) being mounted to move relative to said locking/unlocking means (4) and to said control member (6) between a first position corresponding to the unlocked position and a second position corresponding to the locked position.

5. A utensil (1) according to claim 4, **characterized in that** the second position of the transmission part (14) is a return position, whereas the first position is an unstable equilibrium position outside of which the transmission part (14) is urged back into its second position.

6. A utensil (1) according to claim 4 or claim 5, **characterized in that** the control member (6) and the transmission part (14) co-operate so that, while said control member (6) is moving from its locking position to its unlocking position, the control member (6) exerts a force on the transmission part (14) that drives said transmission part (14) from its second position to its first position.

7. A utensil (1) according to claims 5 and 6, **characterized in that** said control member (6) is provided with at least one cam (12, 13) against which the transmission part (14) is urged back continuously whenever it is not in its first position, said cam (12, 13) being designed to push the transmission part (14) towards its first position under the effect of the control member (6) moving towards its unlocking position.

8. A utensil (1) according to any one of claims 4 to 7, **characterized in that** the control member (6) and the transmission part (14) co-operate so that:
· while the control member (6) is moving from its unlocking position towards its locking position and so long as it has not reached said locking position, said control member (6) does not exert any force on the transmission part (14) that might drive said transmission part out of its first position; and
· as soon as the control member (6) reaches its locking position from its unlocking position, said control member (6) exerts a force on the transmission part (14) that is sufficient for said transmission part to leave its first position.

9. A utensil (1) according to any one of claims 1 to 8, **characterized in that** said control member (6) is mounted to pivot on the lid (3) about a pivot axis (Y-Y').

10. A utensil (1) according to any one of claims 4 to 7, **characterized in that** the transmission part (14) is mounted to move in translation on the lid (3) along a translation axis (W-W').

11. A utensil (1) according to claim 9 or claim 10, **characterized in that** said pivot axis (Y-Y') is substantially perpendicular to said translation axis (W-W').

12. A utensil (1) according to any one of claims 1 to 11, **characterized in that** the locking/unlocking means (4) are mounted to slide on the lid (3) along a slide axis (Z-Z').

13. A utensil according to any one of claims 1 to 12, **characterized in that** it constitutes a pressure cooker.

## Patentansprüche

1. Nahrungsmittelgargerät (1) aufweisend:
- einen Behälter (2) und einen Deckel (3),
- ein Verriegelungs-/Entriegelungsmittel (4), das zwischen einer Verriegelungsposition, in der es den Deckel (3) in Bezug zu dem Behälter (2) verriegelt, und einer Entriegelungsposition, in der der Deckel (3) in Bezug zu dem Behälter (2) frei ist, beweglich ist,
- ein Steuerorgan (6) des Verlagerns des Verriegelungs-/Entriegelungsmittels (4), wobei das Steuerorgan (6) zwischen einer Verriegelungsposition und einer Entriegelungsposition, die jeweils der verriegelten und der entriegelten Position des Verriegelungs-/Entriegelungsmittels (4) entsprechen, beweglich ist,
wobei das Steuerorgan (6) und das Verriegelungs-/Entriegelungsmittel (4) zusammenwirken, damit die Momentanposition des Verriegelungs-/Entriegelungsmittels (4) in Abhängigkeit von der Momentanposition des Steuerorgans (6) gemäß einem ersten Gesetz (I) variiert, wenn das Steuerorgan (6) von seiner Verriegelungsposition zu seiner Entriegelungsposition verlagert wird, wobei das Nahrungsmittelgargerät (1) **dadurch gekennzeichnet ist, dass** das Steuerorgan (6) und das Verriegelungs-/Entriegelungsmittel (4) zusammenwirken, damit die Momentanposition des Verriegelungs-/Entriegelungsmittels (4) in Abhängigkeit von der Momentanposition des Steuerorgans (6) gemäß einem zweiten Gesetz (II, III), das anders ist als das erste Gesetz (I), variiert, wenn das Steuerorgan (6) von seiner Entriegelungsposition zu der Verriegelungsposition verlagert wird.

2. Nahrungsmittelgargerät (1) nach Anspruch 1, **dadurch gekennzeichnet, dass** das erste Gesetz (I) auferlegt, dass die Entfernung, die die Momentanposition des Verriegelungs-/Entriegelungsmittels (4) von seiner verriegelten Positionen trennt, mit der Entfernung zunimmt, die die Momentanposition des Steuerorgans (6) von seiner Verriegelungsposition trennt.

3. Nahrungsmittelgargerät (1) nach Anspruch 1 oder 2, **dadurch gekennzeichnet, dass** das zweite Gesetz (II, III) auferlegt, dass das Verriegelungs-/Entriegelungsmittel (4) in entriegelter Position bleibt, solange das Steuerorgan (6) nicht im Wesentlichen seine Verriegelungsposition erreicht hat.

4. Nahrungsmittelgargerät (1) nach einem der Ansprüche 1 bis 3, **dadurch gekennzeichnet, dass** das Verlagern des verriegelungs-/Entriegelungsmittels (4) von dem Steuerorgan (6) über ein Übertragungsteil (14) gesteuert wird, das zwischen dem Verriegelungs-/Entriegelungsmittel (4) und dem Steuerorgan (6) eingefügt ist, wobei das Übertragungsteil (14) in Bezug zu dem Verriegelungs-/Entriegelungsmittel (4) und dem Steuerorgan (6) zwischen einer ersten Position, die der entriegelten Position entspricht, und einer zweiten Position, die der verriegelten Position entspricht, beweglich ist.

5. Nahrungsmittelgargerät (1) nach Anspruch 4, **dadurch gekennzeichnet, dass** die zweite Position des Übertragungsteils (14) eine Rückholposition ist, während die erste Position eine Position mit instabilem Gleichgewicht ist, außerhalb welcher das Übertragungsteil (14) in seine zweite Position zurückgeholt wird.

6. Nahrungsmittelgargerät (1) nach Anspruch 4 oder 5, **dadurch gekennzeichnet, dass** das Steuerorgan (6) und das Übertragungsteil (14) zusammenwirken, damit das Steuerorgan (6), wenn es sich von seiner Verriegelungsposition zu seiner Entriegelungsposition verlagert, eine Kraft auf das Übertragungsteil (14) ausübt, die dieses Letztere von seiner zweiten zu seiner ersten Position antreibt.

7. Nahrungsmittelgargexät (1) nach den Ansprüchen 5 und 6, **dadurch gekennzeichnet, dass** das Steuerorgan (6) mit mindestens einem Nocken (12, 13) versehen ist, gegen welchen das Übertragungsteil (14) ständig zurückgeholt wird, wenn es sich außerhalb seiner ersten Position befindet, wobei der Nocken (12, 13) konzipiert ist, um das Übertragungsteil (14) unter der Einwirkung der Verlagerung des Steuerorgans (6) zu seiner Entriegelungsposition zu seiner ersten Position zu schieben.

8. Nahrungsmittelgargerät (1) nach einem der Ansprüche 4 bis 7, **dadurch gekennzeichnet, dass** das Steuerorgan (6) und das Übertragungsteil (14) zusammenwirken, damit:
- wenn sich das Steuerorgan (6) von seiner Entriegelungsposition zu seiner Verriegelungsposition verlagert und solange es diese Letztere nicht erreicht hat, das Steuerorgan (6) keine Kraft auf das Übertragungsteil (14) ausübt, die dieses Letztere aus seiner ersten Position heraus antreiben kann,
- und, sobald das Steuerorgan (6) seine Verriegelungsposition ausgehend von seiner Entriegelungsposition erreicht hat, das Steuerorgan (6) eine Kraft auf das Übertragungsteil (14) ausübt, die ausreicht, damit dieses Letztere seine erste Position verlasst.

9. Nahrungsmittelgargerät (1) nach einem der Ansprüche 1 bis 8, **dadurch gekennzeichnet, dass** das Steuerorgan (6) auf dem Deckel (3) gemäß einer Schwenkachse (Y-Y') schwenkbar montiert ist.

10. Nahrungsmittelgargerät (1) nach einem der Ansprüche 4 bis 7, **dadurch gekennzeichnet, dass** das Übertragungsteil (14) auf dem Deckel (3) entlang einer Translationsachse (W-W') in Translation beweglich montiert ist.

11. Nahrungsmittelgargerät (1) nach den Ansprüchen 9 und 10, **dadurch gekennzeichnet, dass** die Schwenkachse (Y-Y') im Wesentlichen zu der Translationssachse (W-W') senkrecht ist.

12. Nahrungsmittelgargerät (1) nach einem der Ansprüche 1 bis 11, **dadurch gekennzeichnet, dass** das Verriegelungs-/Entriegelungsmittel (4) auf dem Deckel (3) entlang einer Gleitachse (Z-Z') gleitend montiert ist.

13. Nahrungsmittelgargerät nach einem der Ansprüche 1 bis 12, **dadurch gekennzeichnet, dass** es einen Dampfdruckkochtopf bildet.
